# EUROPEAN PATENT APPLICATION

(11) **EP 4 309 504 A1**
(43) Date of publication of application: **24.01.2024**
(21) Application number: 22306071.6
(22) Date of filing: 19.07.2022
(51) Int. Cl.: A21D 2/08, A21D 2/36, A23B 9/26, A23B 9/28

(54) **METHOD OF PREPARING A BAKED PRODUCT, BAKED PRODUCT AND DRY COMPOSITION THEREOF COMPRISING FUNGAL FERMENTED PLANT MATERIAL TO REDUCE MOLD**

(71) Applicant: Green Spot Technologies, 31520 Ramonville-Saint-Agne (FR)
(72) Inventor: Granucci, Ninna, Ramonville Saint-Agne (FR); Delpech, Pierre, Ramonville Saint-Agne (FR); Villas-Boas, Silas, Ramonville Saint-Agne (FR)
(74) Representative: A.P.I. Conseil

(57) **Abstract**

The invention relates to a method (100) of preparing a baked product comprising:
- mixing (110) together to form a baker dough:
o at least 20% in weight of grain flour,
o from 0.25% to 40.00% in weight of a flour derived from fungal fermentation of plant material,
o at least 0.5% in weight of yeast, and
o at least 10% in weight of aqueous composition to produce a baker dough; and

- applying a heat treatment (120) to the baker dough to make a baked product.

## Description

### Field of the invention

The present invention relates to the field of agri-food and in particular the baked products.

This invention provides a new method of preparing a baked product, a baked product obtainable from the method of preparing a baked product and a dry composition for baked product preparation.

### Description of Related Art

Food waste is one of the great scourges in the food industry today. The food waste knows several definitions according to the country. For example, in the first directive of 1975 in Europe 75/4423/EEC, the food waste is defined as "any food substance raw or cocked which is thrown away, intended to be thrown away or needs to be thrown away". In the USA, a same definition exists at a federal level and even in the FAO (Food and Agriculture Organization of the United Nations). A study from the FAO estimated the global food waste to be close to 1.3 billion tons of food lost or thrown away each year.

Consequently, food waste is a global societal, social, environmental, economic and even health problem. Indeed, the food waste leads to financial losses for producers, retailers, and consumers. For example, in the UK, in 2009, it represented almost 530 euros per household each year (FAO). Another example, a study made for the European Commission on food waste, avoidable or unavoidable, concludes that 140 kg/inhabitant is wasted. In France, according to the ADEME (Agency for the Environment and Energy Management), the cost of food waste is estimated to be between 100 and 160 euros per year and per person, or a bill of 12 to 20 billion euros.

Moreover, the food waste leads also to water and energy loses and even more the increase of greenhouse gases.

In order to reduce this food waste, many legislations are being put in place across different countries and organizations. In France, the state adopts the European Parliament's commitment to halve waste by 2025.

A study in France conducted by ADEME estimated vegetables as most wasted (31%), followed by liquids (24%) and baked products (13%) and in particular 10% of baked bread is thrown away.

At least a part of the wasted baked product can be associated to a short shelf-life, between 1 and 6 days.

To improve the shelf-life of baked goods and reduce the food waste, bakers and bakery industry are using several additives during breadmaking. For example, to prevent mold appearance, bakers can use artificial or natural preservatives. Depending on their action, the use of these additives faces to different but often common problems: increasing of off-tastes and off-flavors, acidification, impairment of yeast growth, rheological issues, increasing of sugar contents and the incompatibility with a clean label for most of the artificial additives.

Moreover, a large part of artificial and natural additives is based on an acidifying action, e.g. organic artificial acids that act as antimicrobials (benzoates, sorbate, propionate for example) and natural acid agents (vinegar, citric acid, fruit juices or concentrated) *(*Claudia Axel, Emanuele Zannini & Elke K. Arendt. Mold spoilage of bread and its biopreservation:A review of current strategies for bread shelf life extension. Critical Reviews in Food Science and Nutrition. 2017*).* Among the natural mold inhibitors that would lead to an acidification of the recipe, the use of products based on fermented wheat (WO2020217247) or whey could also be an option *(*Raúl Ricardo Gamba, Candela Moure, Gabriela Diosma, Leda Giannuzzi, Graciela Liliana De Antoni, Ángela María León Peláez. Application of Whey Permeate Fermented with Kefir Grains for the Shelf-Life Improvement of Food and Feed. Advances in Microbiology, Vol.6 No.9, August 2016*;* Luz, C., Rodriguez, L., Romano, R., Mañes, J., & Meca, G. (2019). A natural strategy to improve the shelf life of the loaf bread against toxigenic fungi: The employment of fermented whey powder. International Journal of Dairy Technology.*).* In this case, fermenting agents are mostly bacteria (lactic acid bacteria (LAB), actinobacteria, bifidobacteria for example) and more rarely yeasts (e.g. *Meyerozyma guilliermondii, Pichia anomala)* and their production or organic acids can play a role on their anti-mold properties.

To improve the shelf-life, other techniques have been developed as the use of enzyme, and in particular complex enzyme mixture comprising a maltogenic amylase, at least one other amylase, phospholipase, protease and lipase from *Rhizopus oryzae* to increase bread's shelf life (US6923994).

In addition, it is necessary that the technique be easy to implement for the baking industry as well as for the significantly growing home-made.

Hence, there is a need for natural solutions capable of increasing the shelf-life of baked products that are easy to implement in industry or in home-made and that reduce food waste as explained above.

### Summary of the invention

The following sets forth a simplified summary of selected aspects, embodiments and examples of the present invention for the purpose of providing a basic understanding of the invention. However, the summary does not constitute an extensive overview of all the aspects, embodiments and examples of the invention. The sole purpose of the summary is to present selected aspects, embodiments and examples of the invention in a concise form as an introduction to the more detailed description of the aspects, embodiments and examples of the invention that follow the summary.

The invention aims to overcome the disadvantages of the prior art. In particular, the invention proposes a **method of preparing a baked product** comprising:
- mixing together to form a baker dough:
   ∘ at least 20 % in weight of grain flour,
   ∘ from 0.25 % to 40.00 % in weight of a flour derived from fungal fermentation of plant material,
   ∘ at least 0.5% in weight of yeast, and
   ∘ at least 10% in weight of aqueous composition to produce a baker dough; and
- applying a heat treatment to the baker dough to make a baked product.

The advantage of this method is that it increases the shelf life of baked products. The present invention may be added to a classic breadmaking preparation and helping to increase the shelf-life of the baked products by increasing the number of days before the visual detection of the first mold.

In addition, the present invention may reduce the water activity and the moisture content of baked products.

Advantageously, the present invention can be used directly mixed with wheat flour or suspended into water as well and can be used in a handmade breadmaking or in a breadmaking helped by a food processor as well as in bakery industry.

The present invention comprises a flour which extend the shelf-life of baked products through anti-mold properties and which is produced through a natural process of fermentation. The invention can also replace at least a part of the baked artificial and natural additives already used for this purpose.

According to other optional features of the method according to the invention, it can optionally include one or more of the following characteristics alone or in combination:
- the heat treatment is conducted at a temperature of at least 100°C, preferably at least 120°C,
- it comprises steps of adding ingredient(s), adding enzyme(s), kneading, chilling, shaping and/or flattening the baker dough, fermentation and/or drying,
- it comprises a step of leavening the baker dough,
- the plant material is selected from fruit and/or vegetable and/or cereal, preferably the plant material is an agroindustry by-product,
- the fungal is an edible fungus, preferably the fungal fermentation is carried out by an edible fungus.
- the fungus is selected from the genuses *Acremonium, Agaricus, Agrocybe, Akanthomyces, Alternaria, Ampelomyces, Amylosporus, Antrodia, Armillaria, Ashbya, Aspergillus, Atkinsonella, Aureobasidium, Auricularia, Balansia, Balansiopsis, Beauveria, Bispora, Bjerkandera, Boletus, Cantharellus, Catenaria, Cephalosporium, Chaetomium, Chrysonilia, Cladosporium, Claviceps, Clitocybe, Clitopilus, Colletotrichum, Collybia, Coniochaeta, Coprinus, Cordyceps, Coriolus, Cunninghamella, Cyathus, Cyclocybe, Cylindrocarpon, Cylinrocarpum, Cytonaema, Cytospora, Daldinia, Dentipellis, Doratomyces, Echinodothis, Emericella, Emericellopsis, Entoloma, Epichloë, Epicoccum, Favolaschia, Flammulina, Fomes, Fomitopsis, Fusarium, Ganoderma, Giberella, Gliocladium, Grifola, Gymnoascus, Hericium, Hohenbuehelia, Hormonema, Humicola, Hydropus, Hypomontagnella, Hypomyces, Hypoxylon, Hypsizigus, Inocutis, Inocybe, Inonotus, Isaria, Kuehneromyces, Lactarius, Laetiporus, Laxitextum, Lecanicillium, Lentinula, Lentinus, Lepista, Leptoshaeria, Lignosus, Lycoperdon, Lyophyllum, Martierella, Metarhizium, Monascus, Monilia, Monocillium, Morchella, Mortierella, Mucor, Mycelia, Myriogenospora, Neurospora, Nigrospora, Omphalotus, Ophiocordyceps, Oudemansiella, Paecilomyces, Panellus, Panus, Paraconiothyrium, Paraepichloë, Penicillium, Peniophora, Periconia, Pestalotiopsis, Phellinus, Phlebia, Pholiota, Phoma, Phomopsis, Piptoporus, Pleurotus, Pochonia, Polyporus, Preussia, Pycnoporus, Ramaria, Rhizopus, Rhodotus, Sarcodon, Schizophyllum, Scytalidium, Scytalidium, Scytinostroma, Sparassis, Spicaria, Stachybotrys, Steccherinum, Stropharia, Suillus, Thermoascus, Thermomyces, Tolypocladium, Torula, Trametes, Tremella, Trichoderma, Tricholoma, Tuber, Verticillium, Volvariella, Wolfiporia, Wrightoporia,* and/or *Xylaria* and/or a combination of thereof,
- the yeast may correspond to dry yeast and/or leaven and/or baking powder,
- the flour derived from fungal fermentation of plant material comprises at least 0.01 % in weight of fungal biomass,
- the flour derived from fungal fermentation of plant material comprises particles with a median diameter of less than 500 µm,
- the grain flour comprises wheat flour, corn flour, rye flour, barley flour, oat flour, rice flour, sorghum flour, and/or a combination thereof.

According to **another aspect,** the invention can also relate to an edible product preferably a **baked product** obtainable from the method of preparing a baked product according to the invention, said baked product having a water activity of at least 0.80 and said baked product comprising between 0.25 % to 40.00 % in weight of a flour derived from fungal fermentation of plant material.

According to other optional feature of the baked product, it can optionally have a shelf life increased by 10 % of days.

According to **another aspect,** the present invention can also relate to a **dry composition for baked product preparation** comprising a flour derived from fungal fermentation of plant material and a yeast; the mass ratio of the flour derived from fungal fermentation of plant material and the yeast being at least 0.25. Such dry composition allows to increase the shelf-life of baked product.

According to other optional feature of the dry composition for baked product preparation, it can optionally comprise a flour derived from fungal fermentation of plant material and a grain flour; the mass ratio of the flour derived from fungal fermentation of plant material and the grain flour being at least 0.01.

### Brief description of the drawings

The foregoing and other objects, features and advantages of the present invention will become more apparent from the following detailed description when taken in conjunction with the accompanying drawings in which:
FIG. 1 is a schematic view of a method of preparing a baked product according to the present invention.

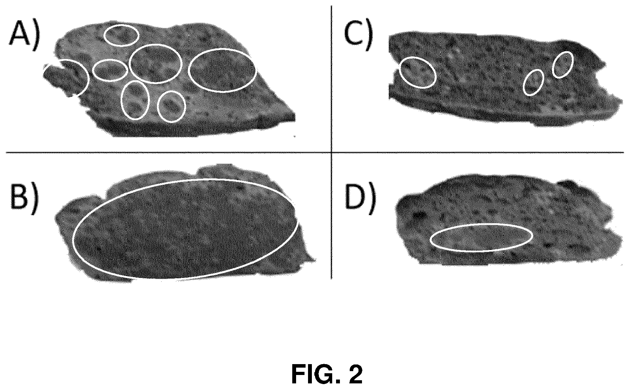

FIG.2 is a picture of bread's slices one week after the breadmaking. Breads were prepared without additive (control, slices A and B) or with 2% of beetroot flour (C) or orange flour (D) compared to wheat flour. The circles surround the mold stains.

Several aspects of the present invention are disclosed with reference to flow diagrams and/or block diagrams of methods, devices according to embodiments of the invention.

On the figures, the flow diagrams and/or block diagrams show the architecture, the functionality and possible implementation of devices or systems or methods according to several embodiments of the invention.

In some implementations, the functions associated with the box may appear in a different order than indicated in the drawings.

For example, two boxes successively shown, may be executed substantially simultaneously, or boxes may sometimes be executed in the reverse order, depending on the functionality involved.

Each box of flow diagrams or block diagrams and combinations of boxes in flow diagrams or block diagrams may be implemented by special systems that perform the specified functions or actions or perform combinations of special equipment.

### Detailed description

A description of example embodiments of the invention follows.

In the following description, when a range is used the limits are included unless otherwise specified.

The term **"about"** as used herein can allow for a degree of variability in a value or range, for example, within 10%, within 5%, or within 1% of a stated value or of a stated limit of a range.

The term **"substantially"** as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more.

By **"substrate",** it should be understood any composition comprising organic matter or a mix between organic matter and inorganic matter allowing initiating or facilitate a fermentation process, for example it can be a source of glucose, a source of carbon, a source of protein, or more generally a source of nutrients that may comprise carbon, nitrogen, minerals... In addition, a substrate may comprise any plant material.

In particular, the expression **"substrate to be fermented",** within the meaning of the invention, can correspond to any substrate suitable for the development of an organism responsible for fermentation process.

**"By-product"** generally relates to a product that is produced as a result of making another product. For example, by-products can be produced during the extraction of juice from fruits or vegetables. Pomace is a typical by-product of fruit juice and vegetable (tomato, carrot) production; sugar beet pomace is a by-product of beet sugar production. Peels and seeds are also common by-products of the food industry. Hence by "by-product » it can be understood peels, skins, pulp, seed, pomace, cake, marc, straw, bran, cobs, shells, and kernel of: fruit, vegetable, cereal or pulse.

By **"edible product",** it should be understood any product that is orally taken by animals and/or human beings, in a solid or liquid form, such as flour and products derived from flour, breadmaking products, biscuits, cakes, meat substitutes, dairy products (milk, yogurt, and butter), dairy substitutes, beverages, cooking aid (stock cubes and the like, aroma, emulsifying agent).

As mentioned, food waste continues to grow and in particular the food waste of baked product. The technics currently used to or developed do not allow to improve the shelf life in a natural and easy way of baked products. There is a need for natural solutions capable of reduce the waste of baked products and that are easy to implement in industry or in home-made.

According to a **first aspect,** the invention relates to a **method of preparing an edible product.** Preferably the invention relates to a method of preparing a baked product.

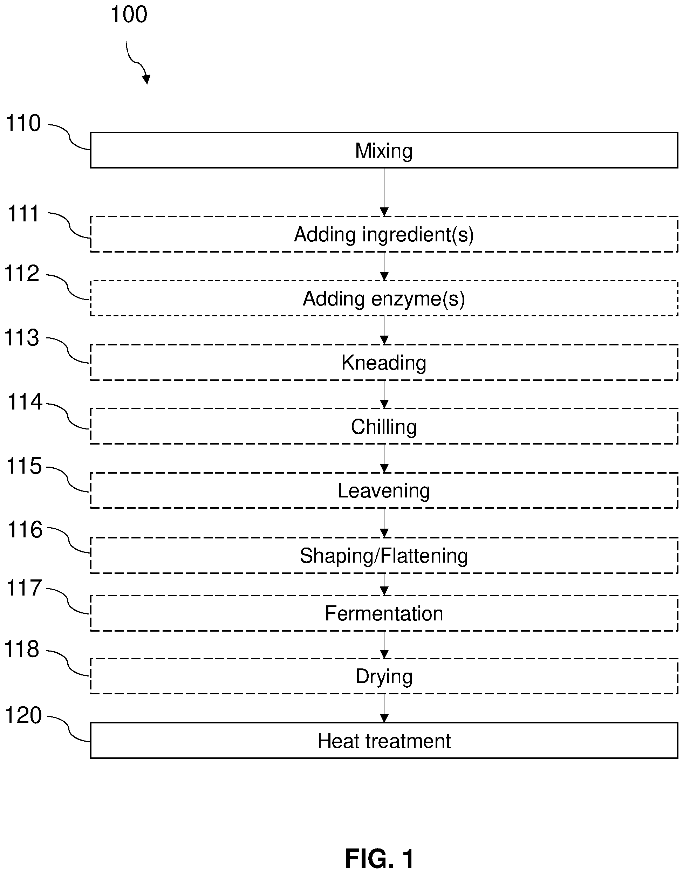

In particular, as illustrated in figure 1, a method 100 of preparing a baked product according to the invention comprises the following steps: mixing 110 grain flour, flour derived from fungal fermentation of plant material, yeast, aqueous composition together to form a baker dough; and applying a heat treatment 120 to the baker dough to make a baked product.

A method 100 according to the invention can also comprise the following steps: steps of drying, chilling, extruding, kneading, fermentation, shaping and/or flattening, and/or adding ingredients, and/or leavening the baker dough, and/or adding one or more enzymes.

As shown in **figure** 1, a method 100 of preparing a baked product according to the invention comprises a **step of mixing 110 to form a baker dough.**

This step may be implemented by a device (food processor, mixer, breadmaking machine) and/or manually.

The step of mixing may be conduct at a temperature between 4°C and 30°C.

The step of mixing may be conduct within a period between 3 min to 120 min Advantageously, the step of mixing may be implemented uniformly. The step of mixing comprises mixing together grain flour, a flour derived from fungal fermentation of plant material, dry yeast, aqueous composition. The mixing allows to form a baker dough.

The step of mixing comprises mixing **grain flour** with the other ingredients. The mixture may comprise at least 20 % in weight of grain flour, preferably at least 25 % in weight more preferably at least 30 % in weight. The mixture may comprise at most 80 % in weight of grain flour, preferably at most 75 % in weight, more preferably at most 70 % in weight. The mixture may comprise between 20 % and 80 % in weight of grain flour, preferably between 25 % and 75 % in weight more preferably between 30 % and 70 % in weight. The grain flour may comprise wheat flour, corn flour, rye flour, barley flour, oat flour, rice flour, sorghum flour and/or a combination thereof. The grain flour allows to participate to the elaboration of the baked product and in particular to the taste, the color, the consistence and texture.

The step of mixing comprises mixing **a flour derived from fungal fermentation of plant** with other ingredients. The mixture may comprise from 0.25 % to 40.00% in weight of a flour derived from fungal fermentation of plant material. Preferably, the mixture may comprise from 0.40 % to 35.00% in weight of a flour derived from fungal fermentation of plant material, more preferably from 0.60 % to 30.00 % and even more preferably from 0.90 % to 25.00 %.

The flour derived from fungal fermentation of plant material may be formed by particles with a median diameter of less than 500 µm, preferably less than 100 µm and more preferably less than 80 µm. The granulometry allows to obtain a homogeneous baker dough. The flour derived from fungal fermentation of plant may be formed by particles with a median diameter at least 1 µm, preferably at least 3 µm and more preferably at least 5 µm. The flour derived from fungal fermentation of plant material may be formed by particles with a median diameter between 1 µm and 500 µm, preferably between 3 µm and 100 µm and more preferably between 5 µm and 80 µm.

The presence of a flour derived from fugal fermentation of plant allows to delay the visual detection of the first mold. In addition, this type of flour may reduce water activity and moisture content.

The plant material may be derivable from any plant and/or plant part, including tubers, roots, stems, leaves, fruits and/or seeds. Materials that can be usefully processed using the methods described herein include cellulosic and lignocellulosic materials, e.g., arable products, crops, grasses, plants and/or feed grains, for example including, but not limited to, plant material (e.g., forage such as alfalfa meals, hay, Bermuda coastal grass hay, sweet grass, corn plants, and/or soybean hay), grains (e.g., barley, corn (including organic and/or genetically modified corn), oats, rice, sorghum, and/or wheat), plant protein products (e.g., canola meals, cottonseed cakes and/or meals, safflower meal, and/or soybean (including organic and/or genetically modified soybean) feed and/or meal), processed grain by-products (e.g., distillers products, brewers dried grains, brewer's spent grains, corn gluten, sorghum germ cake and/or meals, peanut skins, and/or wheat bran), fruit and/or fruit by-products (e.g., dried citrus pulp, apple pomace, and/or pectin pulp), molasses (e.g., beet, citrus, starch, and/or cane molasses), almond hulls, ground shells, buckwheat hulls, legumes and/or legume by-products, and/or other crop by-products. Other raw materials include, but are not limited to, alfalfa, barley, birdsfoot trefoil, brassicas (e.g., chau moellier, kale, rapeseed (canola), rutabaga (swede), and/or turnip), clover (e.g., alsike clover, red clover, subterranean clover, and/or white clover), grass (e.g., false oat grass, fescue, Bermuda grass, brome, heath grass, meadow grass, orchard grass, ryegrass, and/or Timothy grass), invasive plants, maize (corn), millet, oats, sorghum, and/or soybeans.

The plant material may be derivable from any plant and/or plant part, including tubers, roots, stems, leaves, fruits and/or seeds. Materials that can be usefully processed using the methods described herein include cellulosic and lignocellulosic materials, e.g., arable products, crops, grasses and/or plants, for example including, but not limited to, plant material (e.g., forage, hay, Bermuda coastal grass hay, sweet grass, plant protein products (e.g., cottonseed cakes and/or meals), fruit and/or fruit by-products (e.g., dried citrus pulp, apple pomace, and/or pectin pulp), molasses (e.g., beet, citrus, starch, and/or cane molasses), almond hulls, ground shells, buckwheat hulls, legumes and/or legume by-products, and/or other crop by-products. Other raw materials include, but are not limited to, birdsfoot trefoil, brassicas (e.g., chau moellier, kale, rutabaga (swede), and/or turnip), clover (e.g., alsike clover, red clover, subterranean clover, and/or white clover), grass (e.g., false oat grass, fescue, Bermuda grass, brome, heath grass, meadow grass, orchard grass, ryegrass, and/or Timothy grass), invasive plants.

Preferably, the plant material may be selected from fruit and/or vegetable and/or cereal. Fruit, and/or vegetable and/or cereal may include but not limited to kiwifruit, apple, pear, orange, carrot, grape, mango, tomato, sugarbeet, avocado, berries, bean, pea, lime, lemon, feijoa, cassava, onion, parsnip, beetroot, banana, peach, nectarine, paw, pineapple, melon, mesquite, watermelon, acorn, hazelnut, chestnut, chickpea, chia, grape, potato, coconut, almond, soybean, sorghum, arrowroot, amaranth, taro, oats, cattails, quinoa, wheat, barley, buckwheat, corn, rice, atta, spelt, rye, hemp, teff or by-products and/or derivatives thereof. The plant material may be selected from fruit pomaces and/or vegetable pomaces but also from skins/peels, seeds and/or roots and even from press cake.

The plant material may be selected from fruit and/or vegetable. Fruit, and/or vegetable may include but not limited to kiwifruit, apple, pear, orange, carrot, grape, mango, tomato, sugarbeet, avocado, berries, bean, pea, lime, lemon, feijoa, cassava, onion, parsnip, beetroot, banana, peach, nectarine, paw, pineapple, melon, mesquite, watermelon, acorn, hazelnut, chestnut, chickpea, chia, grape, potato, coconut, almond, hemp, teff or by-products and/or derivatives thereof. The plant material may be selected from fruit pomaces and/or vegetable pomaces but also from skins/peels, seeds or roots and/or even from press cake.

The plant material may be selected from cereal. Cereal may include but not limited to grains (e.g., barley, corn (including organic and/or genetically modified corn), oats, rice, sorghum, and/or wheat) and/or processed grain by-products (e.g., distillers products, brewers dried grains, brewer's spent grains, corn gluten, sorghum germ cake and meals, peanut skins, and/or wheat bran),

The fungal may be an edible fungus. An edible fungus may be selected from *Acremonium, Agaricus, Agrocybe, Akanthomyces, Alternaria, Ampelomyces, Amylosporus, Antrodia, Armillaria, Ashbya, Aspergillus, Atkinsonella, Aureobasidium, Auricularia, Balansia, Balansiopsis, Beauveria, Bispora, Bjerkandera, Boletus, Cantharellus, Catenaria, Cephalosporium, Chaetomium, Chrysonilia, Cladosporium, Claviceps, Clitocybe, Clitopilus, Colletotrichum, Collybia, Coniochaeta, Coprinus, Cordyceps, Coriolus, Cunninghamella, Cyathus, Cyclocybe, Cylindrocarpon, Cylinrocarpum, Cytonaema, Cytospora, Daldinia, Dentipellis, Doratomyces, Echinodothis, Emericella, Emericellopsis, Entoloma, Epichloë, Epicoccum, Favolaschia, Flammulina, Fomes, Fomitopsis, Fusarium, Ganoderma, Giberella, Gliocladium, Grifola, Gymnoascus, Hericium, Hohenbuehelia, Hormonema, Humicola, Hydropus, Hypomontagnella, Hypomyces, Hypoxylon, Hypsizigus, Inocutis, Inocybe, Inonotus, Isaria, Kuehneromyces, Lactarius, Laetiporus, Laxitextum, Lecanicillium, Lentinula, Lentinus, Lepista, Leptoshaeria, Lignosus, Lycoperdon, Lyophyllum, Martierella, Metarhizium, Monascus, Monilia, Monocillium, Morchella, Mortierella, Mucor, Mycelia, Myriogenospora, Neurospora, Nigrospora, Omphalotus, Ophiocordyceps, Oudemansiella, Paecilomyces, Panellus, Panus, Paraconiothyrium, Paraepichloë, Penicillium, Peniophora, Periconia, Pestalotiopsis, Phellinus, Phlebia, Pholiota, Phoma, Phomopsis, Piptoporus, Pleurotus, Pochonia, Polyporus, Preussia, Pycnoporus, Ramaria, Rhizopus, Rhodotus, Sarcodon, Schizophyllum, Scytalidium, Scytalidium, Scytinostroma, Sparassis, Spicaria, Stachybotrys, Steccherinum, Stropharia, Suillus, Thermoascus, Thermomyces, Tolypocladium, Torula, Trametes, Tremella, Trichoderma, Tricholoma, Tuber, Verticillium, Volvariella, Wolfiporia, Wrightoporia,* and/or *Xylaria* and/or a combination of thereof.

An edible fungus is preferably selected from the genuses *Aspergillus, Rhizopus, Morchella, Monascus, Pleurotus, Lentinula, Ganoderma, Volvariella, Auricularia, Armillaria, Flammulina, Pholiota, Tremella, Hericium, Agaricus, Laetiporus,* and/or *Sparassis* and/or a combination of thereof.

According to an embodiment of the invention, the flour derived from fungal fermentation of plant material may comprise at least 0.10 % in weigh of fungal biomass, preferably at least 0.15% and more preferably at least 0.20 %. The flour derived from fungal fermentation of plant material may comprise a maximum of 50 % in weigh of fungal biomass, preferably a maximum of 45 % and more preferably a maximum of 40 %. The flour derived from fungal fermentation of plant material may comprise between 0.10 % and 50 % in weigh of fungal biomass, preferably between 0.15 % and 45 % and more preferably between 0.20 % and 40 %.

According to the invention a flour derived from a fungal fermentation of plant may be a solid-state fermentation. A solid-state fermentation may be implemented in agroindustry such as a fermentation of by-products, such as plant or by biomass. A solid-state fermentation may be a technique for growing microorganisms, such as fungi, yeast and/or bacteria, on solid substrates, and preferably in connection with food production. A solid-state fermentation may also refer to the process of fermenting microorganisms on a solid medium that provides anchorage points for the microorganisms in the absence of any freely flowing substance. A solid-state fermentation may comprise at least one of the steps of filling, inoculating, and harvesting preferably performed by automates. Preferably, the solid substrates may be plant material, more preferably, the solid substrates may be a substrate of agroindustry by products. The solid-state fermentation may comprise a step of drying the plant material. In particular, the step of drying will allow reducing water content of plant material especially when it is above 85%, and in particular when it is greater than 95%. For example, the step of drying can be configured to apply heat treatment at a temperature greater than 40°C to the plant material. In addition, the solid-state fermentation may comprise a step of grinding the plant material. In particular, the step of grinding will allow reducing the particle size plant material. For example, the step of grinding can be configured to produce particles of plant material having a D50 (D50 is the size in microns that splits the distribution with half above and half below this diameter) comprised between 0.01 mm and 15 mm, preferably below 10 mm.

Advantageously, the fungal fermentation may be from non-acidifying fermentation or even alkalinizing fermentation.

The flour derived from fungal fermentation of plant material may comprise a soluble beta-glucan such as at least one soluble beta-glucan with a β-(1→3) backbone with β-(1→6) glycosidic linkages. The flour derived from fungal fermentation of plant material may comprise a soluble beta-glucan such as at least one soluble beta-glucan with a β-(1→3) backbone with β-(1→4) glycosidic linkages. In one embodiment according to the invention, the flour derived from fungal fermentation of plant material may comprises at least 0.1 % in dry weight of soluble beta-glucans, preferably at least 0.1% in dry weight of a β-(1→3) backbone with β-(1→4) glycosidic linkages.

The step of mixing may comprise mixing a **yeast** with other ingredients. The mixture may comprise at least 0.5 % in weight of yeast. Preferably, the mixture may comprise at least 1.0 % in weight of yeast, more preferably at least 1.5 % and even more preferably at least 2.0 %. The mixture may comprise at most 7.0 % in weight of yeast. Preferably, mixture may comprise at most 6.0 % in weight of yeast, more preferably at most 5.0 % and even more preferably at most 4.5 %. The mixture may comprise between 0.5 % and 7.0 % in weight of yeast, preferably between 1.0 % and 6.0 %, more preferably between 1.5 % and 5.0 % and even more preferably between 2.0 % and 4.5 %. The yeast allows to participate to the fermentation of the baker dough in order to obtain a baked product. Indeed, the yeast allows the dough to rise.

The yeast may correspond to dry yeast and/or leaven and/or baking powder. Leaven may be selected from wheat, rye, buckwheat, spelt, einkorn, barley, rice and/or milk leaven.

Baking powder may be selected from phosphate (diphosphate, pyrophosphate), sodium carbonate, starch and/or tartaric acid.

The dry yeast may be selected from, *Saccharomyces, Saccharomycodes, Saccharomycopsis.* Preferably, the yeast may be selected from *Saccharomyces.* Preferably, the yeast may be selected from *Saccharomyces cerevisiae* strains.

A dry yeast may be a dehydrated yeast, preferably in granular form.

The step of mixing may comprise mixing **an aqueous composition** with other ingredients. The mixture may comprise at least 10 % in weight of aqueous composition. Preferably, the mixture may comprise at least 15 % in weight of aqueous solution, more preferably at least 20 % and more preferably at least 25 %. The mixture may comprise at most 80 % in weight of aqueous composition, preferably at most 75 %; more preferably at most 70 % and even more preferably at most 65 %. The mixture may comprise between 10 % and 80 % in weight of aqueous composition, preferably between 15 % and 75 %, more preferably between 20 % and 70 % and even more preferably between 25 % and 65 %. Preferably the aqueous composition is at a temperature between 15 °C and 50 °C.

The aqueous solution allows to link the different components to produce a baker dough.

The aqueous solution may comprise water, milk and its derivatives as whey, oil, butter preferably melted, juice and/or cream. Preferably the aqueous solution may comprise water and/or milk.

The method may comprise a step of **adding ingredient 111.** This step of adding allow to modify organoleptic and/or nutritional qualities. The ingredient may be selected from chocolate, fruit, cream, sugar, salt, herb, cereal, vegetable, meat, fish, cheese, egg, and/or other compounds usually used in bakery.

The method may comprise a **step of adding one or more enzymes 112.** Enzyme may improve organoleptic and/or nutritional and/or hygienic qualities of the baker dough and consequently of the baked product. In addition, enzymes participate in the increase of the shelf-life of baked product. Enzyme may be selected from amylase, maltogenic amylase, beta amylase, aminopeptidase, carboxypeptidase, catalase, cellulolytic enzyme, chitinase, cutinase, cyclodextrin glycosyltransferase, deoxyribonuclease, esterase, glucan 1,4- alpha-maltotetrahydrolase, glucanase, galactanase, alpha-galactosidase, betagalactosidase, glucoamylase, glucose oxidase, alpha-glucosidase, beta-glucosidase, haloperoxidase, hemicellulolytic enzyme, invertase, laccase, lipase, mannanase, mannosidase, oxidase, pectinolytic enzymes, peptidoglutaminase, peroxidase, phospholipase, phytase, polyphenoloxidase, proteolytic enzyme, ribonuclease, transglutaminase, and xylanase.

The method according to the invention may comprise a **step of kneading 113.** The kneading allows the development, unrolling and orientation of the gluten protein as well as the incorporation of air into the baker dough. The kneading may be conducted manually or robotically. The duration may be comprised between 1 and 120 minutes. The temperature may be comprised between 4 °C and 40 °C.

The method may comprise a **step of chilling 114.** This step allows the dough to rest. The rest may be conducted at a temperature between 2 °C and 6 °C. The rest may be comprised between 18 hours and 48 hours.

The method according to the invention may comprise a **step of leavening 115** the baker dough. This step of leavening the baker dough allow the development of the fermentation that is conducted by the yeast in the baker dough and to develop flavor. The duration may be comprised between 1 min and 12 hours. The duration may be uninterrupted or interrupted i.e. several repetitions between kneading/leavening. The texture will be improved by these repetitions. The temperature may be between 4 °C and 40 °C.

The method may comprise a **step of shaping and/or flattening 116** the baker dough. This step allows to form the future baked product. The form is not limited as well the weight. In one embodiment, the step of shaping and/or flattening may be conducted before and/or after the fermentation.

The method may comprise a **step of fermentation 117.** Preferably, the method may comprise a step of fermentation of the shaped baker dough. The fermentation allows to improve organoleptic and/or nutritional qualities and to improve the degassing. The duration may be comprised between 30 min and 48 hours. The temperature may be between 20 °C and 40 °C.

The method may comprise a **step of drying 118.** This step allows to reduce the water content, especially when it is above 85% for example.

The method according to the invention may comprise a **step of applying a heat treatment 120** to the baker dough to make a baked product. The heat treatment allows to cook the baker dough, to stop fermentation and development of yeast and even other microorganisms. The heat treatment also contributes to the development of nutritional, hygienic and organoleptic qualities.

The heat treatment may be conducted at a temperature at least 100 °C, preferably at least 120 °C and more preferably at least 130 °C. The heat treatment may be conducted at a temperature at most 400 °C, preferably at most 350 °C and more preferably at most 300 °C. The heat treatment may be conducted at a temperature between 100 °C and 400 °C, preferably between 120 °C and 350 °C and more preferably between 130 °C and 300 °C. The duration of the heat treatment may be at least 5 min, preferably at least 10 min, more preferably at least 15 min and even more preferably at least 20 min. The duration of the heat treatment may be at most 200 min, preferably at most 180 min, more preferably at most 90 min and even more preferably at most 60 min. The duration of the heat treatment may be between 5 min and 200 min, preferably between 10 min and 180 min, more preferably between 15 min and 90 min, and even more preferably between 20 min and 60 min.

The heat treatment may be uniform or according to a temperature gradient. For example, the temperature may be between 235 and 250 °C from 45 minutes to 60 minutes and between 200 °C and 230 °C from 40 minutes to 45 minutes.

The heat treatment may be a vapor treatment, conduction treatment, convection treatment, radiant treatment and/or boiling treatment

Advantageously, the atmosphere may be humid at the start of the heat treatment. For example, during the first 10 minutes.

During the heat treatment, the baked product may loss in weight, and in particular the baked product may loss between 10 % and 20 % in weight. The baked product may change in volume (decrease or increase).

Advantageously, after the heat treatment, the baked product comprises between 0.25 % and 40.00 % in weight of flour derived from fungal fermentation of plant material.

The method may comprise a **step of extruding.** The extrusion may be a hot extrusion or a cold extrusion. A hot extrusion may comprise a temperature between 90 °C and 250 °C. A cold extrusion may comprise a temperature between 0 °C and 50 °C. The extrusion allows to stabilize the baked product.

The baked product may be selected from bread, aery bread, flat bread, buns, brioche, baguette, pastry, viennoiserie, pizza bread.

According to **another aspect,** the invention relates to a **baked product.** Preferably a baked product obtainable from the method of preparing a baked product according to the invention. Even more preferably a baked product obtained from the method of preparing a baked product according to the invention.

A baked product may have a water activity of at least 0.80, preferably at least 0.85 and more preferably at least 0.90. The baked product may have a water activity at most 1.00, preferably at most 0.99 and more preferably at most 0.95. The baked product may have a water activity between 0.80 and 1.00, preferably between 0.85 and 0.99 and more preferably between 0.90 and 0.95. The water activity may depend on the plant material used to produce the flour derived from fungus fermentation of plant material which play a role on the shelf life.

A baked product may present a moisture content of between 15 % and 60 %, preferably between 25 % and 50 % and more preferably between 30 % and 40 %. The moisture content may depend on the plant material used to produce the flour derived from fungus fermentation of plant material which play a role on the shelf life.

The baked product may comprise at least 0.25 % in weight of a flour derived from fungal fermentation of plant material, preferably at least 0.30 %, more preferably at least 0.35 % and even more preferably at least 0.40 %. The baked product may comprise at most 40.00 % in weight of a flour derived from fungal fermentation of plant material, preferably at most 35.00 %, more preferably at most 30.00 % and even more preferably at most 25.00 %. The baked product may comprise between 0.25 % and 40.00 % in weight of a flour derived from fungal fermentation of plant material, preferably between 0.30 % and 35.00 %, more preferably between 0.35 % and 30.00 % and even more preferably between 0.40 % and 25.00 %. Preferably the flour is the flour derived from fungal fermentation of plant material as explained above.

The baked product may have a shelf-life increased by 5 % of days more compared to a control without visual detection of mold; preferably by 10 %, more preferably by 20 % and even more preferably by 25 %. The baked product may have a shelf-life increased by 40 % maximum (table 1). Indeed, the baked product presents an increased shelf life. The positive effect of the baked product is demonstrated in the following table 1 to 3 to delay the visual detection of the first molds, particularly thanks to the reduced water activity and moisture content.

According to **another aspect,** the invention relates to a **dry composition for baked product preparation** comprising a flour derived from fungal fermentation of plant material and a yeast; the mass ratio of the flour derived from fungal fermentation of plant material and the yeast being at least 0.25. Preferably, the mass ratio of the flour derived from fungal fermentation of plant material and the yeast may be at least 0.50 and more preferably at least 1.00 and even more preferably at least 5.00. The mass ratio of the flour derived from fungal fermentation of plant material and the yeast may be at most 20.00, preferably at most 15.00 and more preferably at most 10.00 and even more preferably at most 9.00. The mass ratio of the flour derived from fungal fermentation of plant material and the yeast may be between 0.25 and 20.00, preferably between 0.50 and 15.00 and more preferably between 1.00 and 10.00 and even more preferably between 5.00 and 9.00. Preferably, the flour derived from fungal fermentation of material corresponds to the flour derived from fungal fermentation of material as disclosed above. Preferably, the yeast corresponds to the yeast as disclosed above.

A dry composition for baked product preparation may comprise a flour derived from fungal fermentation of plant material and a grain flour; the mass ratio of the flour derived from fungal fermentation of plant material and the grain flour being at least 0.01, preferably at least 0.25, more preferably at least 0.50. The mass ratio of the flour derived from fungal fermentation of plant material and the grain flour may be at most 1.00, preferably at most 0.90 and more preferably at most 0.80. The mass ratio of the flour derived from fungal fermentation of plant material and the grain flour may be between 0.01 and 1.00, preferably between 0.25 and 0.90 and more preferably between 0.50 and 0.80. Preferably, the grain flour corresponds to the grain flour as disclosed above.

A dry composition for baked product preparation may comprise at least 20% in weight of grain flour and from 0.25 % to 20.00 % in weight of a flour derived from fungal fermentation of plant material.

A dry composition is easily used by baker, industries or home-made.

### EXAMPLES

### Breadmaking.

### Materials

- Air-o-steam oven Electrolux, razorblade, kettle, kitchen aid for kneading, kitchen aid bowls, serviettes, thermometer, 10L bottle and 500 ml bottles, funnel, water spray, marker and tape, kitchen scale, baking paper, cutting board.

### Ingredients

- Wheat flour (T65) : 3.92 kg
- Flour derived from fungal fermentation of plant material (FF)
   ∘ Citrus flour: 40 g
   ∘ Tuber flour 40 g
- Salt: 72 g
- Yeast (Saf-levure-dry) : 43.5 g

### Recipe for 500 g of wheat flour

| Dough | Wheat flour (T65) in g | FF in g | Salt in g | Yeasts (Saf, dry) in ml* | Water to add in ml |
|---|---|---|---|---|---|
| Control (x2) | 500 | 0 | 9 | 300 | 0 |
| Citrus 1% | 495 | 5 | 9 | 300 | 0 |
| Citrus 2% | 490 | 10 | 9 | 300 | 0 |
| Citrus 5% | 475 | 25 | 9 | 300 | 80 |
| Tuber 1% | 495 | 5 | 9 | 300 | 0 |
| Tuber 2% | 490 | 10 | 9 | 300 | 0 |
| Tuber 5% | 475 | 25 | 9 | 300 | 55 |

Mix all the ingredients together well until for and homogenic dough, adding water, kneading, resting, shaping, cooking.

The present invention relates to the use of flours produced from the fermentation of fruit, cereal and vegetable by-products, as described above, in order to extent the shelf-life of baked product and reduce the food waste. The positive effect of these flours to delay the visual detection of the first mold is demonstrated. The effect of these flours to reduce water activity and moisture content play a role on the bread's shelf life.

**Table 1. Bread shelf-life (visual detection of molds) depending on the flour derived from fungal fermentation of plant material used as an additive and their concentration. The increasing of bread shelf-life is the proportion of the number of days without any visual detection of molds in supplemented breads compared to that in control breads (0% of flour derived from fungal fermentation of plant material). The asterisk indicates a ratio on which the number of days before the visual detection of molds is significantly different between control and supplemented breads, according to a t-test (p-value < 0.05).**

| Concentration of flour compared to wheat flour | Increasing of bread shelf-life (% of days) according to the additive | |
|---|---|---|
| | Orange flour | Beetroot flour |
| 1% | 3% | + 38% * |
| 2% | + 40% * | + 26% * |
| 5% | + 31% * | 8% |

In one embodiment, the visual detection is significantly delayed in time when the flour derived from fungal fermentation of plant material is added to the recipe (Table 1). Breads can stay maximum 40% days more compared to a control without the visual detection of a mold. The original recipe contains 60% of water, 1.8% of salt and 1.25% of dry yeast compared to wheat flour (T65). The flour derived from fungal fermentation of plant material is added in replacement of wheat flour. When flour derived from fungal fermentation of plant material is added at 5%, more water needs to be added. Also, the recipe for flour derived from fungal fermentation of plant material and for example orange flour at 5% contains 80% of water compared to wheat flour (76% compared to total flours) and the recipe for flour derived from fungal fermentation of plant material with beetroot for example at 5% contains 75% of water compared to wheat flour (73% compared to total flours).

In an aspect, the delay of the first mold visual detection is observed if the breads were prepared handmade and if there were prepared using a food processor as well.

In another aspect, the delay of the first mold visual detection is observed from ratios of flour derived from fungal fermentation of plant material / Wheat flour ranging from 1% to 5%.

In another aspect, the delay of the first mold visual detection depends on the fruit or vegetable by-product. If the maximum delay induced by orange flour is close to that by beetroot flour (+40% of days and +38% of days, respectively), the effect is already observable if the beetroot flour is formulated at only 1% compared to the wheat flour while it requires 2% of orange flour in the recipe to observe the effect.

In another aspect, the mold development is also longer in breads supplemented with orange and beetroot flours (figure 1).

**Table 2. Properties of handmade breads prepared with or without beetroot flour, regarding their water content. Different letters (a, b) indicate significantly different values for a same column according to a t-test (p-value < 0.05).**

| Concentration of GST flour compared to wheat flour | Water activity | | Relative humidity (% of moisture) | |
|---|---|---|---|---|
| | 0h | After 72h | 0h | After 72h |
| **Control (0%)** | 0,942 ^{a} | 0,926 ^{a} | 43,697 ^{a} | 39,133 ^{a} |
| **Beetroot 1%** | 0,936 ^{b} | 0,922 ^{a} | 40,147 ^{b} | 35,583 ^{b} |
| **Beetroot 2%** | 0,937 ^{b} | 0,916 ^{b} | 40,833 ^{b} | 35,281 ^{b} |
| **Beetroot 5%** | 0,937 ^{b} | 0,925 ^{a} | 43,310 ^{a} | 38,378 ^{a} |

**Table 3. Properties of breads prepared with a food processor and with or without orange GST flour, regarding their water content. Different letters (a, b) indicate significantly different values for a same column according to a t-test (p-value < 0.05).**

| Concentration of GST flour compared to wheat flour | Water activity | | Relative humidity (% of moisture) | |
|---|---|---|---|---|
| | 0h | After 72h | 0h | After 72h |
| **Control (0%)** | 0,939 ^{a} | 0,922 ^{a} | 43,890 ^{a} | 37,390 ^{a} |
| **Orange 1%** | 0,941 ^{b} | 0,929 ^{a} | 45,146 ^{a} | 40,639 ^{a} |
| **Orange 2%** | 0,937 ^{a} | 0,924 ^{a} | 41,333 ^{a} | 37,879 ^{a} |
| **Orange 5%** | 0,937 ^{a} | 0,925 ^{a} | 44,120 ^{a} | 39,368 ^{a} |

In another aspect, the delay of the first mold visual detection can be related to a decrease of water activity and relative humidity of breads, like with the use of beetroot flour (table 2) but can also be related to other factors if these two parameters are not different to that of a control, like with the use of orange flour (table 3).

In another embodiment, the use of flour derived from fungal fermentation of plant material in a bread's recipe could reduce the water activity and the moisture content of final baked goods, like it is observed with the use of beetroot flour (Table 2). The original recipe contains 60% of water, 1.8% of salt and 1.25% of dry yeast compared to wheat flour (T65). The flour derived from fungal fermentation of plant material is added in replacement of wheat flour. When flour derived from fungal fermentation of plant material is added at 5%, more water needs to be added. Also, the recipe with orange flour derived from fungal fermentation of plant material at 5% contains 80% of water compared to wheat flour (76% compared to total flours) and the recipe for beetroot flour derived from fungal fermentation of plant material at 5% contains 75% of water compared to wheat flour (73% compared to total flours). The use of flour derived from fungal fermentation of plant material at a level of 1% or 2% compared to the wheat flour helped to significantly reduce the water activity and the relative humidity in breads.

In an aspect, the reduction of water activity and relative humidity in breads by the use of a flour derived from fungal fermentation of plant material in the recipe was observed directly after the breadmaking and still observed after 3 days of storage.

In another aspect, the reduction of water activity and relative humidity in breads by the use of a flour derived from fungal fermentation of plant material in the recipe was more persistent if the flour derived from fungal fermentation of plant material was added at a level of 2% compared to the wheat flour.

In another aspect, the reduction of water activity and relative humidity in breads by the use of a flour derived from fungal fermentation of plant material depends on the fruit or vegetable by-product used to prepare the flour derived from fungal fermentation of plant material. If this effect was observed with beetroot flour (table 2), it was not observed with orange flour (table 3).

### EXAMPLES - Burgers Buns

### Ingredients (g)

### Test 0 (Control)

| **Ingredients** | **Mass** |
|---|---|
| Wheat flour | 320.19 |
| Sugar | 18.52 |
| Salt | 5.00 |
| Butter | 27.22 |
| Lukewarm semi-skimmed milk | 180.18 |
| Lukewarm water | 0 |
| Fresh yeast | 11.85 |
| eggs | 37.04 |

### Test 1 (invention)

| **Ingredients** | **Mass** |
|---|---|
| Wheat flour | 284.19 |
| Sugar | 18.52 |
| Salt | 5.00 |
| Butter | 27.22 |
| Lukewarm semi-skimmed milk | 180.18 |
| Lukewarm water | 0 |
| Fresh yeast | 11.85 |
| eggs | 37.04 |
| Flour derived from fungal fermentation of plant material | 36.00 |

### Tasting

| Date D = Day | Qualities | Test 0 | Test 1 |
|---|---|---|---|
| D0 | Visual Aspect | Not crusty - White color | Not crusty. Grey/brown color. Crumb less beautiful. |
| | Texture | Airy crumb. Humid texture which makes a dough in mouth. | Crumb more compact and drier but ok in mouth. |
| | Taste | Yeast taste ok. | Grains taste ok |
| | | Milk taste. | |
| D5 | Shelf-life | Breads with mold visual detection : 0% | Breads with mold visual detection : 0% |
| | Texture | very dry, crumbly | drier than the control |
| | Taste | taste of the fat | strong taste of grain |
| D7 | Shelf-life | Breads with mold visual detection : 100% | Breads with mold visual detection : 0% |

Thanks to the presence of the flour derived from fungal fermentation of plant material the shelf-life of the trial 1 is increased in comparison with the control. The control was mostly after 7 days while those prepared with flour derived from fungal fermentation of plant material was not.

The present invention can be used in baked good formulations, from a concentration ranging from 1% to 5% compared to wheat flour, in order to increase their shelf-life by reducing the mold contaminations. The invention can also replace artificial or natural additives already commercialized to this end.

The invention can be the subject of numerous variants and applications other than those described above. In particular, unless otherwise indicated, the different structural and functional characteristics of each of the implementations described above should not be considered as combined and / or closely and / or inextricably linked to each other, but on the contrary as simple juxtapositions. In addition, the structural and / or functional characteristics of the various embodiments described above may be the subject in whole or in part of any different juxtaposition or any different combination.

## Claims

1. Method (100) of preparing a baked product comprising:
- mixing (110) together to form a baker dough:
∘ at least 20% in weight of grain flour,
∘ from 0.25% to 40.00% in weight of a flour derived from fungal fermentation of plant material,
∘ at least 0.5% in weight of yeast, and
∘ at least 10% in weight of aqueous composition to produce a baker dough; and
- applying a heat treatment (120) to the baker dough to make a baked product.

2. The method (100) of preparing a baked product according to claim 1, wherein the heat treatment is conducted at a temperature of at least 100°C, preferably at least 120°C.

3. The method (100) of preparing a baked product according to claim 1 or 2, wherein it comprises steps of adding ingredient(s) (111), adding enzyme(s) (112), kneading (113), chilling (114), shaping and/or flattening (116) the baker dough, fermentation (117) and/or drying (118).

4. The method (100) of preparing a baked product according to any one of the preceding claims, wherein it comprises a step of leavening (115) the baker dough.

5. The method (100) of preparing a baked product according to any one of the preceding claims, wherein the plant material is selected from fruit and/or vegetable and/or cereal preferably the plant material is an agroindustry by product.

6. The method (100) of preparing a baked product according to any one of the preceding claims, wherein the fungal is an edible fungus.

7. The method (100) of preparing a baked product according to any one of the preceding claims , wherein the fungus is selected from the genuses *Acremonium, Agaricus, Agrocybe, Akanthomyces, Alternaria, Ampelomyces, Amylosporus, Antrodia, Armillaria, Ashbya, Aspergillus, Atkinsonella, Aureobasidium, Auricularia, Balansia, Balansiopsis, Beauveria, Bispora, Bjerkandera, Boletus, Cantharellus, Catenaria, Cephalosporium, Chaetomium, Chrysonilia, Cladosporium, Claviceps, Clitocybe, Clitopilus, Colletotrichum, Collybia, Coniochaeta, Coprinus, Cordyceps, Coriolus, Cunninghamella, Cyathus, Cyclocybe, Cylindrocarpon, Cylinrocarpum, Cytonaema, Cytospora, Daldinia, Dentipellis, Doratomyces, Echinodothis, Emericella, Emericellopsis, Entoloma, Epichloë, Epicoccum, Favolaschia, Flammulina, Fomes, Fomitopsis, Fusarium, Ganoderma, Giberella, Gliocladium, Grifola, Gymnoascus, Hericium, Hohenbuehelia, Hormonema, Humicola, Hydropus, Hypomontagnella, Hypomyces, Hypoxylon, Hypsizigus, Inocutis, Inocybe, Inonotus, Isaria, Kuehneromyces, Lactarius, Laetiporus, Laxitextum, Lecanicillium, Lentinula, Lentinus, Lepista, Leptoshaeria, Lignosus, Lycoperdon, Lyophyllum, Martierella, Metarhizium, Monascus, Monilia, Monocillium, Morchella, Mortierella, Mucor, Mycelia, Myriogenospora, Neurospora, Nigrospora, Omphalotus, Ophiocordyceps, Oudemansiella, Paecilomyces, Panellus, Panus, Paraconiothyrium, Paraepichloë, Penicillium, Peniophora, Periconia, Pestalotiopsis, Phellinus, Phlebia, Pholiota, Phoma, Phomopsis, Piptoporus, Pleurotus, Pochonia, Polyporus, Preussia, Pycnoporus, Ramaria, Rhizopus, Rhodotus, Sarcodon, Schizophyllum, Scytalidium, Scytalidium, Scytinostroma, Sparassis, Spicaria, Stachybotrys, Steccherinum, Stropharia, Suillus, Thermoascus, Thermomyces, Tolypocladium, Torula, Trametes, Tremella, Trichoderma, Tricholoma, Tuber, Verticillium, Volvariella, Wolfiporia, Wrightoporia,* and/or *Xylaria* and/or a combination of thereof.

8. The method (100) of preparing a baked product according to any one of the preceding claims, wherein the yeast corresponds to dry yeast and/or leaven and/or baking powder.

9. The method (100) of preparing a baked product according to any one of the preceding claims, wherein the flour derived from fungal fermentation of plant material comprise at least 0.10 % in weigh of fungal biomass.

10. The method (100) of preparing a baked product according to any one of the preceding claims, wherein the flour derived from fungal fermentation of plant material comprises particles with a median diameter of less than 500 µm.

11. The method (100) of preparing a baked product according to any one of the preceding claims, wherein the grain flour comprises wheat flour, corn flour, rye flour, barley flour, oat flour, rice flour, sorghum flour, and/or a combination thereof.

12. A baked product obtainable from the method of preparing a baked product according to any one of claims 1 to 11, said baked product having a water activity of at least 0.80 and said baked product comprising between 0.25 % to 40.00 % in weight of a flour derived from fungal fermentation of plant material.

13. A baked product according to the preceding claim, wherein the baked product has a shelf-life increased by 10 %.

14. A dry composition for baked product preparation comprising a flour derived from fungal fermentation of plant material and a yeast; the mass ratio between the flour derived from fungal fermentation of plant material on the yeast being of at least 0.25.

15. A dry composition for baked product preparation comprising a flour derived from fungal fermentation of plant material and a grain flour; the mass ratio between the flour derived from fungal fermentation of plant material and the grain flour being at least 0.01.
